# EUROPÄISCHE PATENTSCHRIFT

(11) **EP 2 297 447 B1**
(45) Veröffentlichungstag und Bekanntmachung des Hinweises auf die Patenterteilung: **29.08.2012**
(21) Anmeldenummer: 09772213.6
(22) Anmeldetag: 04.05.2009
(51) Int. Cl.: F02M 59/10, F04B 1/04

(54) **HOCHDRUCKPUMPE**
HIGH-PRESSURE PUMP
POMPE À HAUTE PRESSION

(30) Priorität: 02.07.2008 DE 102008040081
(43) Veröffentlichungstag der Anmeldung: 23.03.2011
(73) Patentinhaber: Robert Bosch GmbH, 70442 Stuttgart (DE)
(72) Erfinder: MEIER, Gerhard, 73614 Schorndorf (DE); MERZ, Armin, 71384 Weinstadt (DE); BOECKING, Friedrich, 70499 Stuttgart (DE)
(86) Internationale Anmeldenummer: PCT/EP2009/055327
(87) Internationale Veröffentlichungsnummer: WO 2010/000513

(56) Entgegenhaltungen:
- WO-A-2004/097219
- DE-A1-102006 048 722
- GB-A- 837 087
- US-A- 4 152 953

## Beschreibung

Die Erfindung betrifft eine Hochdruckpumpe, insbesondere eine Radial- oder Reihenkolbenpumpe für Brennstoffeinspritzanlagen von luftverdichtenden, selbstzündenden Brennkraftmaschinen, nach dem Oberbegriff des Anspruchs 1.

Eine solche Hochdruckpumpe ist durch die US-A-4 152 953 bekannt. Diese Hochdruckpumpe weist zumindest eine Pumpenbaugruppe und eine Antriebswelle auf, die zumindest einen der Pumpenbaugruppe zugeordneten Nocken aufweist. Die Pumpenbaugruppe weist eine auf einer Lauffläche des Nockens laufende Rolle und einen Rollenschuh auf, der die Rolle aufnimmt. Die Rolle ist an der Lauffläche des Nockens in einer Laufrichtung geführt. Zur Führung der Rolle ist dabei in der Lauffläche des Nockens eine über dessen Umfang umlaufende Nut eingebracht und auf der Rolle ist eine Scheibe angeordnet, die in die Nut des Nockens eingreift. Diese Ausbildung zur Führung der Rolle erfordert einen großen Fertigungsaufwand und zusätzliche Bauteile.

Durch die GB-A-837 087 ist ebenfalls eine Hochdruckpumpe bekannt, die zumindest eine Pumpenbaugruppe und eine Antriebswelle aufweist, welche zumindest einen der Pumpenbaugruppe zugeordneten Nocken aufweist. Die Pumpenbaugruppe weist eine auf einer Lauffläche des Nockens laufende Rolle und einen Rollenschuh auf, der die Rolle aufnimmt. Die Rolle ist an der Lauffläche des Nockens in einer Laufrichtung geführt. Zur Führung der Rolle sind dabei seitlich neben dem Nocken Flansche angeordnet, zwischen denen die Rolle angeordnet ist. Auch diese Ausbildung zur Führung der Rolle erfordert einen großen Fertigungsaufwand und zusätzliche Bauteile.

### Vorteile der Erfindung

Die erfindungsgemäße Hochdruckpumpe mit den Merkmalen des Anspruchs 1 hat demgegenüber den Vorteil, dass auf einfache Weise eine Führung der Rolle in einer Laufrichtung durch die Ausbildung der Rolle und der Lauffläche des Nockens erreicht ist, ohne dass hierzu zusätzliche Bauteile erforderlich sind.

In den abhängigen Ansprüchen sind vorteilhafte Ausgestaltungen und Weiterbildungen der erfindungsgemäßen Hochdruckpumpe angegeben.

Es ist vorteilhaft, dass die Rolle doppelkegelstumpfförmig ausgestaltet ist, wobei die Rolle aus zwei zusammengesetzten Kegelstümpfen gebildet sein kann. Hierdurch wird eine relativ glatte Ausgestaltung sowohl der Rollfläche der Rolle als auch der Lauffläche des Nockens ermöglicht.

Hierbei kann die Rolle aus den beiden Kegelstumpfteilen so zusammengesetzt sein, dass in einer Mitte der Rollfläche der Rolle, an der die Kegelstumpfteile der Rolle zusammengesetzt sind, ein maximaler Querschnitt vorgesehen ist. Alternativ kann die Rolle auch so aus den Kegelstumpfteilen zusammengesetzt sein, dass die Rolle in der Mitte der Rollfläche der Rolle einen minimalen Querschnitt aufweist.

Ferner ist es auch vorteilhaft, dass die Rolle zwei Kegelstumpfteile aufweist, zwischen denen ein zylinderförmiger Mittelteil vorgesehen ist. Bei dieser Ausgestaltung kann in einfacher Weise ein gewisses Spiel vorgegeben sein, das durch die Länge des Mittelteils bestimmt ist.

Bei den Ausgestaltungen der Rolle, die zumindest abschnittsweise konisch sind, ist die Lauffläche des Nockens und/oder eine Aufnahmefläche des Rollenschuhs, der die Rolle aufnimmt, an die Ausgestaltung der Rollfläche der Rolle angepasst.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine Hochdruckpumpe in einer schematischen, axialen Schnittdarstellung entsprechend einem ersten nicht erfindungsgemäßen Beispeil ;
Fig. 2 den in Fig. 1 mit II bezeichneten Ausschnitt einer Hochdruckpumpe entsprechend einem ersten Ausführungsbeispiel der Erfindung;
Fig. 3 den in Fig. 2 gezeigten Ausschnitt einer Hochdruckpumpe entsprechend einem zweiten Ausführungsbeispiel der Erfindung;
Fig. 4 den in Fig. 2 gezeigten Ausschnitt einer Hochdruckpumpe entsprechend einem dritten Ausführungsbeispiel der Erfindung.

### Ausführungsformen der Erfindung

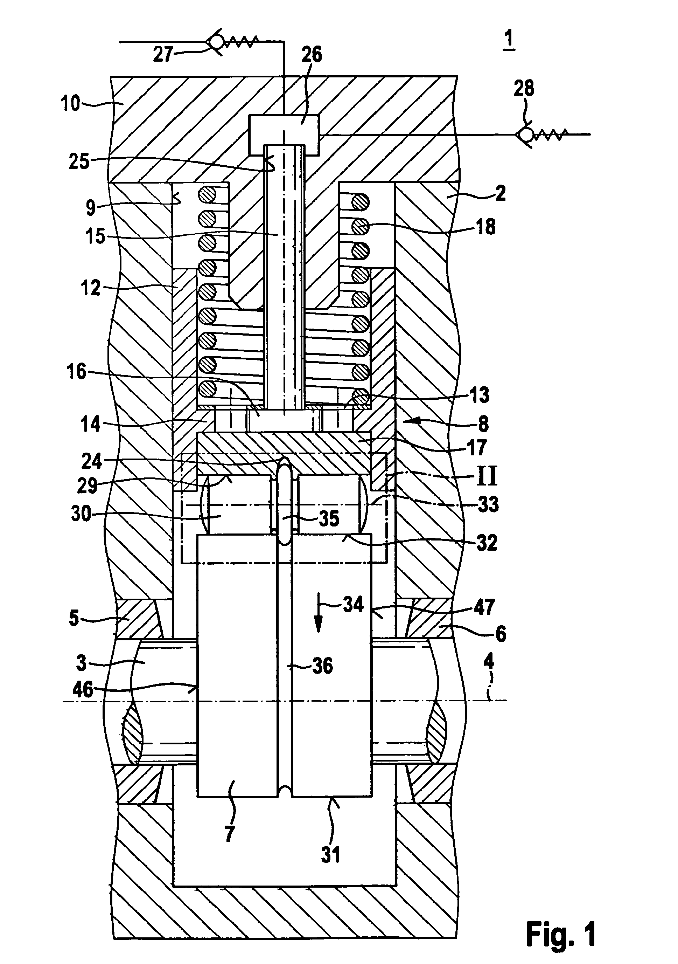

Fig. 1 zeigt eine Hochdruckpumpe 1 in einer schematischen, axialen Schnittdarstellung. Die Hochdruckpumpe 1 kann insbesondere als Radial- oder Reihenkolbenpumpe ausgestaltet sein. Speziell eignet sich die Hochdruckpumpe 1 als Brennstoffpumpe für Brennstoffeinspritzanlagen von luftverdichtenden, selbstzündenden Brennkraftmaschinen. Ein bevorzugter Einsatz der Hochdruckpumpe 1 besteht für eine Brennstoffeinspritzanlage mit einer Brennstoffverteilerleiste, einem sogenannten Common-Rail, das Dieselbrennstoff unter hohem Druck speichert. Die erfindungsgemäße Hochdruckpumpe 1 eignet sich jedoch auch für andere Anwendungsfälle.

Die Hochdruckpumpe 1 weist ein mehrteiliges Pumpengehäuse 2 auf. In dem Pumpengehäuse 2 ist eine Antriebswelle 3 angeordnet, die an zwei in Richtung einer Drehachse 4 der Antriebswelle 3 voneinander beabstandeten Lagerstellen 5, 6 gelagert ist. Die Antriebswelle 3 kann durch eine Brennkraftmaschine rotierend angetrieben werden, wobei eine hohe Übersetzung möglich ist. Beispielsweise kann die Antriebswelle 3 von einer Ausgleichswelle der Brennkraftmaschine angetrieben sein.

Die Antriebswelle 3 weist zumindest einen Nocken 7 auf. Dabei kann der Nocken 7 auch als Mehrfachnocken ausgestaltet sein. Ferner kann der Nocken 7 auch durch einen exzentrischen Abschnitt der Antriebswelle 3 gebildet sein. In dem Pumpengehäuse 2 ist eine Pumpenbaugruppe 8 angeordnet, die dem Nocken 7 zugeordnet ist.

Die Pumpenbaugruppe 8 ist zumindest im Wesentlichen in einer Bohrung 9 des Pumpengehäuses 2 angeordnet. Dabei ist ein Zylinderkopf 10 mit dem Pumpengehäuse 2 verbunden, wobei ein Ansatz 11 des Zylinderkopfes 10 in die Bohrung 9 ragt. Die Pumpenbaugruppe 8 weist einen hohlzylinderförmigen Stößelkörper 12 auf, der in der Bohrung 9 geführt ist. In dem Stößelkörper 12 ist ein Mitnahmeelement 13 vorgesehen, das an einem Absatz 14 des Stößelkörpers 12 anliegt. Die Pumpenbaugruppe 8 weist außerdem einen Kolben 15 auf, wobei das Mitnahmeelement 13 einen Bund 16 des Kolbens 15 gegen einen Rollenschuh hält. Hierbei wird das Mitnahmeelement 13 von einer Stößelfeder 18 beaufschlagt. Die Stößelfeder 18 dient dabei auch als Rückstellfeder für die Pumpenbaugruppe 8.

In dem Ansatz 11 ist eine Zylinderbohrung 25 ausgebildet, in der der Kolben 15 geführt ist. Hierbei begrenzt der Kolben 15 einen Pumpenarbeitsraum 26 im Zylinderkopf 10. Der Pumpenarbeitsraum 26 ist über ein Einlassventil 27 befüllbar. Ferner ist ein Auslassventil 28 vorgesehen, über das Brennstoff aus dem Pumpenarbeitsraum 26 zu einem Common-Rail oder dergleichen gefördert werden kann.

Der Rollenschuh 17 nimmt eine Rolle 30 auf, die an einer Lauffläche 31 des Nockens 7 läuft. Hierbei rollt eine Rollfläche 32 der Rolle 30 an der Lauffläche 31 des Nockens 7 ab.

Bei einem Förderhub, bei dem die Pumpenbaugruppe 8 über das Einlassventil 27 Brennstoff in den Pumpenarbeitsraum 26 saugt, erfolgt eine Rückstellung des Kolbens 15 durch die Stößelfeder 18. Bei dem anschließenden Förderhub, bei dem unter hohem Druck stehender Brennstoff im Pumpenarbeitsraum 26 über das Auslassventil 28 gefördert wird, betätigt der Nocken 7 über die Rolle 30 und den Rollenschuh 17 den Kolben 15.

Im Betrieb der Hochdruckpumpe 1 und auch beim Start ist eine zumindest näherungsweise koaxiale Ausrichtung der Rolle 30 in Bezug auf die Drehachse 4 für einen zuverlässigen Betrieb erforderlich. Eine Achse 33 der Rolle 30 ist dabei zumindest im Wesentlichen parallel zu der Drehachse 4 der Antriebswelle 3 orientiert. Allerdings besteht die Gefahr, dass im Betrieb oder bereits bei der Inbetriebnahme eine übermäßige Verkippung der Achse 33 der Rolle 30 in Bezug auf die Drehachse 4 der Antriebswelle 3 erfolgt. In diesem Fall wäre die Rolle 30 nicht mehr an der Lauffläche 31 des Nockens 7 ausgerichtet. Dadurch kann es zu Betriebsstörungen oder auch zum Ausfall der Hochdruckpumpe 1 kommen.

Die Rolle 30 und der Nocken 7 weisen jeweils eine Formgebung auf, die übermäßige Verkippungen der Rolle 30 verhindern. Dadurch ist eine Führung der Rolle 30 gewährleistet.

Bei der in der Fig. 1 dargestellten nicht erfindungsgemäßen Ausführungsform weist die Rolle 30 an ihrer Rollfläche 32 einen umlaufenden Steg 35 auf, der zumindest näherungsweise in der Mitte der Rolle 30 vorgesehen ist. Ferner weist der Nocken 7 an seiner Lauffläche 31 eine in einer Laufrichtung 34 verlaufende Führungsnut 36 auf. Der umlaufende Steg 35 der Rolle 30 greift in die Führungsnut 36 des Nockens 7 ein. Dabei kann ein gewisses Spiel zwischen dem umlaufenden Steg 35 der Rolle 30 und der Führungsnut 36 des Nockens 7 bestehen. Durch die Zusammenwirkung des umlaufenden Steges 35 der Rolle 30 mit der Führungsnut 36 des Nockens 7 ist die Rolle 30 in der Laufrichtung 34 von dem Nocken 7 geführt. Dabei ist in diesem Ausführungsbeispiel die Rolle 30 an der Lauffläche 31 des Nockens 7 in der Laufrichtung 34 geführt. Durch das Spiel zwischen dem umlaufenden Steg 35 und der Führungsnut 36 des Nockens 7 sind gewisse Verkippungen der Rolle 30 möglich, die aber auf einen gewünschten Bereich begrenzt sind. Diese Verkippungen können für einen zuverlässigen Betrieb erforderlich sein. Übermäßige Verkippungen der Rolle 30 aus ihrer koaxialen Ausgangsstellung zu der Drehachse 4 der Antriebswelle 3 sind allerdings durch die Führung verhindert.

Die Form des umlaufenden Stegs 35 der Rolle 30 und die Ausgestaltung der Führungsnut 36 des Nockens 7 sind aufeinander abgestimmt, wobei unterschiedliche Ausgestaltungen möglich sind und ein auf den jeweiligen Anwendungsfall angepasstes Spiel eingestellt werden kann.

Der Rollenschuh 17 weist eine Aufnahmefläche 29 auf, an der sich die Rolle 30 abstützt. An der Aufnahmefläche 29 der Rolle 30 ist eine Ausnehmung 24 vorgesehen, die entsprechend der Führungsnut 36 des Nockens 7 ausgestaltet sein kann und in die der umlaufende Steg 35 der Rolle 30 eingreift. Durch das Zusammenwirken des umlaufenden Stegs 35 der Rolle 30 mit der Ausnehmung 24 in der Aufnahmefläche 29 des Rollenschuhs 17 wird eine zuverlässige Positionierung auch des Rollenschuhs 17 gewährleistet. Die Ausnehmung 24 kann aber auch relativ groß in Bezug auf den umlaufenden Steg 35 ausgestaltet sein, so dass im Betrieb ein Kontakt zwischen dem umlaufenden Steg 35 und dem Rollenschuh verhindert ist.

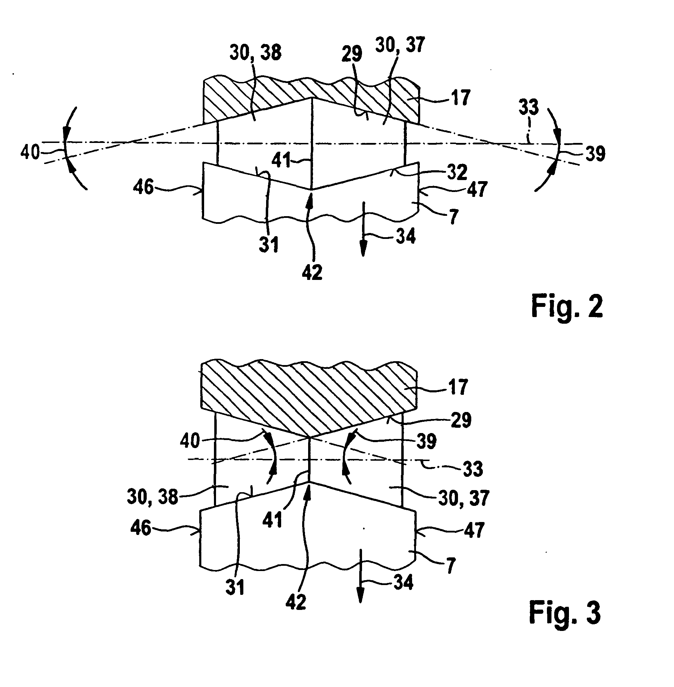

Fig. 2 zeigt den in Fig. 1 mit II bezeichneten Ausschnitt einer Hochdruckpumpe 1 entsprechend einem ersten erfindungsgemäßen Ausführungsbeispiel. In diesem Ausführungsbeispiel ist die Rolle 30 aus zwei Kegelstumpfteilen 37, 38 zusammengesetzt. Dadurch ist die Rolle 30 doppelkegelstumpfförmig ausgestaltet. Dadurch weist die Rolle 30 an ihrer Rollfläche 32 konisch ausgestaltete Abschnitte auf, wobei ein Abschnitt durch den Kegelstumpfteil 37 und der andere Abschnitt durch den Kegelstumpfteil 38 gebildet ist. Ein für den Kegelstumpfteil 37 vorgegebener Kegelwinkel 39 in Bezug auf die Achse 33 der Rolle 30 ist vorzugsweise relativ klein gewählt. Entsprechendes gilt für einen Kegelwinkel 40, der für den Kegelstumpfteil 38 in Bezug auf die Achse 33 vorgegeben ist. Vorzugsweise sind der Kegelwinkel 39 für den Kegelstumpfteil 37 und der Kegelwinkel 40 für den Kegelstumpfteil 38 gleich groß. Die Lauffläche 31 des Nockens 7 ist an die Kegelstumpfteile 37, 38 angepasst. Hierdurch weist die Lauffläche 31 des Nockens 7 ein Führungsprofil auf, das V-förmig ausgestaltet ist.

Entsprechend ist die Aufnahmefläche 29 des Rollenschuhs 17 an die Ausgestaltung der Rolle 30 angepasst.

Fig. 3 zeigt den in Fig. 2 gezeigten Ausschnitt einer Hochdruckpumpe 1 entsprechend einem zweiten Ausführungsbeispiel. In diesem Ausführungsbeispiel ist die Rolle 30 aus zwei Kegelstumpfteilen 37, 38 zusammengesetzt. Hierbei sind die beiden Kegelstumpfteile 37, 38 so zusammengesetzt, dass die Rolle 30 an einer Verschneidungslinie 41 in der Mitte 42 der Rolle 30 einen minimalen Querschnitt aufweist. Im Unterschied dazu weist bei dem in der Fig. 2 dargestellten Ausführungsbeispiel die Rolle 30 an der Verschneidungslinie 41 in der Mitte 42 einen maximalen Querschnitt auf. Die Verschneidungslinie 41 ergibt sich jeweils als die Linie, an der die Kegelstumpfteile 37, 38 aneinander angrenzen.

Bei dem in der Fig. 3 dargestellten Ausführungsbeispiel ist die Lauffläche 31 des Nockens 7 an die Form der Rolle 30 angepasst, so dass sich eine Lauffläche 31 mit einem spitzen Profil ergibt. Entsprechend ist auch die Aufnahmefläche 29 des Rollenschuhs 17 an die Form der Rolle 30 angepasst ausgestaltet, wobei sich ebenfalls ein spitzes Profil ergibt.

Die Kegelwinkel 39, 40 sind ebenfalls vorzugsweise relativ klein vorgegeben.

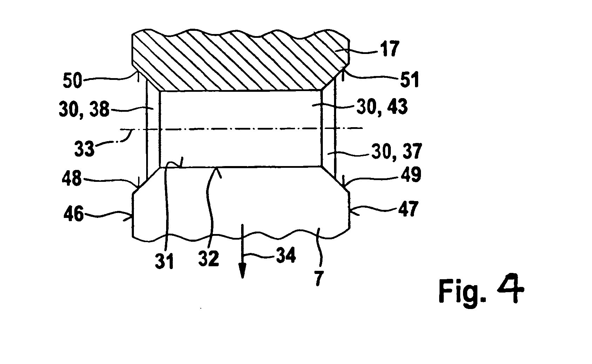

Fig. 4. zeigt den Fig. 2 gezeigten Ausschnitt einer Hochdruckpumpe 1 entsprechend einem dritten Ausführungsbeispiel. In diesem Ausführungsbeispiel weist die Rolle 30 Kegelstumpfteile 37, 38 auf, die über ein Mittelteil 43 miteinander verbunden sind. Die Rollfläche 32 der Rolle 30 ist dabei im Wesentlichen an dem Mittelteil 43 vorgesehen, das relativ lang ausgestaltet ist. Die Kegelstumpfteile 37, 38 sind verhältnismäßig kurz ausgestaltet, so dass diese im Wesentlichen die Funktion der Führung haben. Dabei wirken die Kegelstumpfteile 37, 38 der Rolle 30 mit an dem Nocken 7 im Bereich der Seiten 46, 47 vorgesehenen Fasen 48, 49 zusammen. Entsprechende Fasen 50, 51 sind auch an dem Rollenschuh 17 ausgebildet. Dadurch ist eine Führung der Rolle 30 in der Laufrichtung 34 gewährleistet. Ferner ist auch eine gewisse Positionierung des Rollenschuhs 17 in Bezug auf die Rolle 30 gewährleistet.

## Patentansprüche

1. Hochdruckpumpe, insbesondere Radial- oder Reihenkolbenpumpe für Brennstoffeinspritzanlagen von luftverdichtenden, selbstzündenden Brennkraftmaschinen, mit zumindest einer Pumpenbaugruppe (8) und einer Antriebswelle (3), die zumindest einen der Pumpenbaugruppe (8) zugeordneten Nocken (7) aufweist, wobei die Pumpenbaugruppe (8) eine auf einer Lauffläche (31) des Nockens (7) laufende Rolle (30) und einen Rollenschuh (17) aufweist, der die Rolle (30) aufnimmt, wobei die Rolle (30) an der Lauffläche (31) des Nockens (7) in einer Laufrichtung (34) geführt ist, **dadurch gekennzeichnet, dass** eine Rollfläche (32) der Rolle (30) zumindest abschnittsweise konisch ausgestaltet ist und dass die Lauffläche (31) des Nockens (7) an die Rollfläche (32) der Rolle (30) angepasst ausgestaltet ist.

2. Hochdruckpumpe nach Anspruch 1,
**dadurch gekennzeichnet,**
**dass** die Rolle (30) doppelkegelstumpfförmig ausgestaltet ist.

3. Hochdruckpumpe nach Anspruch 2,
**dadurch gekennzeichnet,**
**dass** die Rolle (30) aus zwei zusammengesetzten Kegelstumpfteilen (37, 38) gebildet ist und dass die Rolle (30) in einer Mitte (42) der Rollfläche (32) der Rolle (30), an der die Kegelstumpfteile (37, 38) der Rolle (30) zusammengesetzt sind, einen maximalen Querschnitt aufweist.

4. Hochdruckpumpe nach Anspruch 2,
**dadurch gekennzeichnet,**
**dass** die Rolle (30) aus zwei zusammengesetzten Kegelstumpfteilen (37, 38) gebildet ist und dass die Rolle (30) in einer Mitte (42) der Rollfläche (32) der Rolle (30), an der die Kegelstumpfteile (37, 38) der Rolle (30) zusammengesetzt sind, einen minimalen Querschnitt aufweist.

5. Hochdruckpumpe nach Anspruch 1,
**dadurch gekennzeichnet,**
**dass** die Rolle (30) zwei Kegelstumpfteile (37, 38) aufweist, zwischen denen ein zylinderförmiger Mittelteil (43) vorgesehen ist.

6. Hochdruckpumpe nach einem der Ansprüche 1 bis 5,
**dadurch gekennzeichnet,**
**dass** der Rollenschuh (17), der die Rolle (30) aufnimmt, eine Aufnahmefläche (29) aufweist, die an die konische Ausgestaltung der Rollfläche (32) der Rolle (30) angepasst ist.

## Claims

1. High-pressure pump, in particular radial or in-line piston pump for fuel injection systems of air-compression or auto-ignition internal combustion engines, with at least one pump subassembly (8) and with a drive shaft (3) which has at least one cam (7) assigned to the pump subassembly (8), the pump subassembly (8) having a roller (30) running on a running surface (31) of the cam (7), and a roller shoe (17) which receives the roller (30), the roller (30) being guided on the running surface (31) of the cam (7) in a running direction (34), **characterized in that** a rolling surface (32) of the roller (30) is at least partially configured conically, and **in that** the running surface (31) of the cam (7) is configured so as to be adapted to the rolling surface (32) of the roller (30).

2. High-pressure pump according to Claim 1, **characterized in that** the roller (30) is configured in the form of a double cone frustum.

3. High-pressure pump according to Claim 2, **characterized in that** the roller (30) is formed from two joined-together cone frustum parts (37, 38), and **in that** the roller (30) has a maximum cross section in a middle (42) of the rolling surface (32) of the roller (30), at which middle the cone frustum parts (37, 38) of the roller (30) are joined together.

4. High-pressure pump according to Claim 2, **characterized in that** the roller (30) is formed from two joined-together cone frustum parts (37, 38), and **in that** the roller (30) has a minimum cross section in a middle (42) of the rolling surface (32) of the roller (30), and at which middle the cone frustum parts (37, 38) of the roller (30) are joined together.

5. High-pressure pump according to Claim 1, **characterized in that** the roller (30) has two cone frustum parts (37, 38), between which a cylindrical middle part (43) is provided.

6. High-pressure pump according to one of Claims 1 to 5, **characterized in that** the roller shoe (17) which receives the roller (30) has a reception surface (29) which is adapted to the conical configuration of the rolling surface (32) of the roller (30).

## Revendications

1. Pompe haute pression, en particulier pompe à pistons radiaux ou en ligne pour des installations d'injection de carburant de moteurs à combustion interne à auto-allumage et suralimentation d'air, comprenant au moins un module de pompe (8) et un arbre d'entraînement (3), qui présente au moins une came (7) associée au module de pompe (8), le module de pompe (8) présentant un rouleau (30) roulant sur une surface de roulement (31) de la came (7) et un sabot de rouleau (17), qui reçoit le rouleau (30), le rouleau (30) étant guidé sur la surface de roulement (31) de la came (7) dans une direction de roulement (34), **caractérisée en ce qu'**une surface de rouleau (32) du rouleau (30) est configurée au moins en partie sous forme conique, et **en ce que** la surface de roulement (31) de la came (7) est configurée de manière adaptée à la surface de rouleau (32) du rouleau (30).

2. Pompe haute pression selon la revendication 1,
**caractérisée en ce que**
le rouleau (30) est configuré en forme de double tronc de cône.

3. Pompe haute pression selon la revendication 2,
**caractérisée en ce que**
le rouleau (30) est formé de deux parties de tronc de cône assemblées (37, 38) et **en ce que** le rouleau (30) présente une section transversale maximale en un centre (42) de la surface de rouleau (32) du rouleau (30), au niveau duquel les parties de tronc de cône (37, 38) du rouleau (30) sont assemblées.

4. Pompe haute pression selon la revendication 2,
**caractérisée en ce que**
le rouleau (30) est formé de deux parties de tronc de cône assemblées (37, 38) et **en ce que** le rouleau (30) présente une section transversale minimale dans un centre (42) de la surface de rouleau (32) du rouleau (30), au niveau duquel les parties de tronc de cône (37, 38) du rouleau (30) sont assemblées.

5. Pompe haute pression selon la revendication 1,
**caractérisée en ce que**
le rouleau (30) présente deux parties de tronc de cône (37, 38) entre lesquelles est prévue une partie centrale cylindrique (43).

6. Pompe haute pression selon l'une quelconque des revendications 1 à 5,
**caractérisée en ce que**
le sabot de rouleau (17) qui reçoit le rouleau (30) présente une surface de réception (29) qui est adaptée à la configuration conique de la surface de rouleau (32) du rouleau (30).
